# FASCICULE DE BREVET EUROPEEN

(11) **EP 4 438 473 B1**
(45) Date de publication et mention de la délivrance du brevet: **29.01.2025**
(21) Numéro de dépôt: 24151750.7
(22) Date de dépôt: 15.01.2024
(51) Int. Cl.: B64C 25/32, B64C 25/52

(54) **GIRAVION MUNI D'UNE CELLULE PORTÉE PAR UN TRAIN D'ATTERRISSAGE À PATINS À ZONES DE REPRISE D'EFFORTS VARIABLES**
DREHFLÜGELFLUGZEUG, DAS MIT EINER DURCH EIN KUFENFAHRWERK GETRAGENEN ZELLE MIT ZONEN ZUR AUFNAHME VARIABLER KRÄFTE AUSGESTATTET IST
ROTORCRAFT PROVIDED WITH A CELL SUPPORTED BY A LANDING GEAR WITH SKIDS WITH VARIABLE STRESS-RELIEVING ZONES

(30) Priorité: 30.03.2023 FR 2303075
(43) Date de publication de la demande: 02.10.2024
(73) Titulaire: Airbus Helicopters, 13725 Marignane Cedex (FR)
(72) Inventeur: HONNORAT, Olivier, 13290 AIX EN PROVENCE (FR); GENELOT, Nicolas, 13111 COUDOUX (FR); BENAUSSE, Jérôme, 83560 LA VERDIERE (FR)
(74) Mandataire: GPI Brevets

(56) Documents cités:
- CN-A- 106 347 638
- FR-A1- 2 554 210
- FR-A1- 2 965 546
- FR-B1- 2 895 368
- US-A- 4 270 711

## Description

La présente invention concerne un giravion muni d'une cellule portée par un train d'atterrissage à patins à zones de reprise d'efforts variables. Plus précisément, l'invention se situe dans le domaine technique des trains d'atterrissage à patins de giravion.

Classiquement, un giravion comporte un atterrisseur sur lequel une cellule du giravion repose au sol. Plus particulièrement, un atterrisseur dénommé « train d'atterrissage à patins » est muni d'un premier patin longitudinal d'appui et d'un deuxième patin longitudinal d'appui. Les patins sont destinés à être en contact avec le sol.

Pour relier chaque patin à la cellule du giravion, un train d'atterrissage à patins peut être muni d'une première traverse et d'une deuxième traverse reliant chacune le premier patin au deuxième patin.

Par ailleurs, un giravion comportant un rotor de sustentation portant au moins trois pales articulées est susceptible d'être sujet au phénomène de résonance sol.

En effet, les oscillations de chaque pale autour de son axe de traînée peuvent se coupler de façon instable avec les mouvements de la cellule du giravion suivant les modes de déformations élastiques notamment en roulis du train d'atterrissage : c'est l'origine du phénomène dénommé « résonance sol ».

Lors de leur rotation, les pales sont écartées de leur position d'équilibre dans le plan de rotation du rotor, et peuvent se répartir angulairement inégalement autour de l'axe de rotation du rotor. Cette répartition inégale est à l'origine d'un balourd par déplacement du centre de gravité du rotor hors de l'axe de rotation de ce rotor. De plus, les pales écartées de leur position d'équilibre oscillent autour de cette position d'équilibre à une fréquence d'oscillation FPP qui est la fréquence propre des pales en traînée. La cellule du giravion est alors excitée à des fréquences d'excitation égales à la valeur absolue de la fréquence de rotation du rotor plus ou moins la fréquence d'oscillation FPP.

Un risque d'instabilité au sol existe lorsque la fréquence propre du fuselage sur son train d'atterrissage en roulis ou en tangage est voisine d'une fréquence d'excitation ce qui correspond au phénomène dénommé résonance sol. En pratique, une instabilité en roulis peut se produire si la fréquence propre du fuselage sur son train d'atterrissage en roulis est voisine de la valeur absolue de la fréquence de rotation du rotor moins la fréquence d'oscillation FPP.

Pour éviter l'instabilité, il est notamment connu de rechercher à éviter le croisement de ces fréquences en adaptant la raideur en roulis et/ou en tangage du train d'atterrissage. Toutefois, l'adaptation des trains d'atterrissage peut être complexe. Un compromis doit notamment être trouvé entre d'une part la raideur verticale du train d'atterrissage qui gère le confort et le niveau de charge introduit dans la cellule lors d'un atterrissage, et d'autre part les raideurs en tangage et en roulis qui sont très influentes sur le comportement en résonance sol.

On rappelle que l'homme du métier appelle « raideur verticale » la raideur du train d'atterrissage sous l'effet de la pesanteur (ou tout autre sollicitation verticale) selon l'axe en élévation du giravion, à l'assiette statique près.

Par ailleurs, le train d'atterrissage est connecté à la cellule du giravion par des fixations connectant les traverses avant et arrière à la cellule.

Un train d'atterrissage à patins usuel comporte deux fixations sur une traverse et une fixation centrale sur l'autre traverse. Un tel train d'atterrissage pouvant peut-être qualifié de « train à trois points de fixation ». Un train à trois points de fixation présente l'avantage d'abaisser la fréquence propre en roulis de la cellule reposant sur le train ce qui peut tendre à limiter les risques d'apparition du phénomène de résonance sol. La cellule doit toutefois être renforcée pour résister aux efforts introduits lors d'un atterrissage sévère en un unique point par la traverse fixée par une unique fixation à la cellule.

Un autre train d'atterrissage à patins usuel comporte deux fixations par traverse et peut être qualifié de « train à quatre points de fixation ». Un tel train d'atterrissage est intéressant en permettant de répartir les efforts subis dans deux longerons de la cellule lors d'un atterrissage sévère. Par contre, la fréquence propre en roulis de la cellule reposant sur le train est de fait augmentée.

La mise au point d'un train d'atterrissage à patins est ainsi délicate.

Divers trains d'atterrissage sont connus pour notamment éviter l'apparition du phénomène de résonance sol.

Le document FR 2 749 561 A1 décrit un train d'atterrissage à patins à trois points de fixation.

Le document FR 2 554 210 A1 présente une poutre flexible en matériaux composites ayant sensiblement la forme d'un caisson allongé de structure stratifiée. Deux semelles rigides sont reliées par deux voiles. Un plot déformable d'absorption d'énergie est disposé entre les deux semelles, et comporte au moins un bloc d'un matériau élastomère à forte rémanence de déformation. La poutre comprend de plus au moins un amortisseur viscoélastique monté sur la face externe de la semelle. Cet amortisseur est sollicité en traction par des bielles lors de la déformation en flexion de la poutre pour produire un amortissement s'ajoutant à l'amortissement assuré par chaque plot d'absorption d'énergie.

Le document US 4 270 711 présente un train d'atterrissage muni d'une poutre reliée par un pivot à une traverse du train d'atterrissage de manière à pouvoir effectuer une rotation autour d'un axe.

Le document US 6 244 538 présente une traverse coopérant avec deux fixations à pivot.

Le document US 3, 173,632 présente un train d'atterrissage muni de deux patins reliés par deux tiges de torsion.

Le document FR 2 895 368 B1 présente un giravion muni d'une traverse avant ayant quatre liaisons avant pour être reliée à une cellule, et une traverse arrière ayant une unique fixation centrale. Les quatre liaisons avant comprennent deux premiers moyens de liaison actifs pour transmettre des efforts entre la traverse avant et la cellule tant que la traverse avant subit une déformation inférieure à une déformation prédéterminée en roulis ou en enfoncement vertical, et deux deuxièmes moyens de liaison actifs pour transmettre des efforts lorsque la traverse subit une déformation qui atteint ou dépasse la déformation prédéterminée.

Le document FR 2 965 546 A1 décrit un aéronef comprenant un train d'atterrissage s'adaptant à la pente d'un sol.

Les documents FR 2 995874 A1, FR 3 014 079 B1 et FR 3 029 891 B1 sont aussi connus. Le document CN 106 347 638 A est aussi connu et décrit un train d'atterrissage à patins pour drone.

La présente invention a alors pour objet de proposer un giravion muni d'un train d'atterrissage innovant pour limiter les risques d'apparition du phénomène de résonance sol et pour optimiser structurellement la cellule.

L'invention vise ainsi un giravion muni d'une voilure tournante et d'un train d'atterrissage à patins, le train d'atterrissage étant muni d'un premier patin et d'un deuxième patin ainsi que d'une première traverse et d'une deuxième traverse reliant chacune le premier patin au deuxième patin, la première traverse et la deuxième traverse ayant chacune une première branche descendante solidarisée au premier patin ainsi qu'une deuxième branche descendante solidarisée au deuxième patin et une branche centrale reliant la première branche à la deuxième branche, la première traverse étant connectée à une cellule du giravion uniquement par deux fixations.

Les deux fixations peuvent être connectées à deux longerons respectifs de la cellule.

La deuxième traverse est uniquement portée en vol par deux supports fixés à la cellule, les deux supports étant traversés par la deuxième traverse, chaque support comprenant un orifice délimité par une surface d'arrêt de ce support, la deuxième traverse présentant tout le temps un jeu avec chaque surface d'arrêt, ladite cellule portant un appui médian agencé transversalement entre les deux supports et au-dessus de la deuxième traverse lorsque le giravion repose sur un sol horizontal, la deuxième traverse étant en appui contre l'appui médian et lesdits jeux étant présents au-dessus de la deuxième traverse lorsque le giravion repose sur un sol et en l'absence d'une accélération verticale et d'une déformation plastique de la deuxième traverse.

L'expression « lesdits jeux étant présents au-dessus de la deuxième traverse lorsque le giravion repose sur un sol et en l'absence d'une accélération verticale et d'une déformation plastique de la deuxième traverse » signifie que, lorsque le giravion repose sur un sol et hors cas de retournement et de déformations, un espace est situé au-dessus de la deuxième traverse entre cette deuxième traverse et chaque surface d'arrêt à la vue d'un observateur.

Par suite au sol et dans des conditions d'atterrissage normales, le train d'atterrissage se comporte comme un train à trois points de fixation durant une première phase de fonctionnement. Les efforts cheminent entre le train d'atterrissage et la cellule via les deux fixations pour la première traverse, et l'appui médian pour la deuxième traverse. En effet, les supports sont dimensionnés pour présenter un jeu, au-dessus de la deuxième traverse dans ces conditions, pour éviter la transmission d'efforts. Dès lors, la fréquence propre en roulis de la cellule sur son train d'atterrissage est minimisée ce qui peut tendre à améliorer le comportement du giravion d'un point de vue résonance sol.

De plus, l'utilisation d'un appui médian simplement en contact avec le dessus de la deuxième traverse en vol et n'enserrant pas la deuxième traverse, et non pas d'une bride enserrant la traverse, permet de créer entre la deuxième traverse et la cellule une liaison permettant de découpler totalement le mode de vibration en roulis de la cellule des autres modes de vibration.

En outre, cette transmission d'efforts via l'appui médian reste modérée dans des conditions d'atterrissage normales. L'appui médian peut être dés lors fixé à une structure ne nécessitant pas d'être extrêmement renforcée.

Durant un atterrissage sévère, une deuxième phase de fonctionnement de la deuxième traverse est initiée. La deuxième traverse fléchit en se creusant sous l'appui médian ce qui induit un contact de cette deuxième traverse avec les sommets des surfaces d'arrêt des supports. Les efforts cheminent entre le train d'atterrissage et la cellule via les deux fixations pour la première traverse, et les deux supports pour la deuxième traverse. Désormais, les supports sont dimensionnés pour présenter un jeu en dessous de la traverse. Le train d'atterrissage se comporte alors comme un train à quatre points de fixation.

Les efforts importants générés par l'atterrissage sévère au niveau de la deuxième traverse cheminent ainsi en deux zones différentes de la cellule ce qui permet d'optimiser son dimensionnement. En outre, la deuxième traverse peut se déformer plastiquement ce qui permet d'absorber une partie de l'énergie cinétique de la cellule lors de l'atterrissage.

Ainsi, le giravion est muni d'un train d'atterrissage présentant les avantages d'un train d'atterrissage à patins à trois points de fixation dans des conditions normales, et les avantages d'un train d'atterrissage à patins à quatre points de fixation dans des conditions plus défavorables.

Le giravion peut de plus comporter une ou plusieurs des caractéristiques qui suivent, prises seules ou en combinaison.

Selon une possibilité, la deuxième traverse ayant en élévation une partie inférieure et une partie supérieure, lorsque le giravion repose sur un sol et en l'absence d'une accélération verticale et d'une déformation plastique de la deuxième traverse, alors la partie inférieure repose sur un fond de la surface d'arrêt de chaque support alors qu'un dit jeu sépare la partie supérieure d'un sommet de la surface d'arrêt de chaque support et que la partie supérieure est en appui contre l'appui médian.

L'expression « la deuxième traverse ayant en élévation une partie inférieure et une partie supérieure » signifie que, lorsque le giravion repose sur un sol, hors cas de retournement, la partie supérieure est au-dessus de la partie inférieure pour un observateur.

Par suite, les efforts transitent uniquement via l'appui médian entre la deuxième traverse et la cellule.

A l'inverse, en présence d'une déformation supérieure à une déformation seuil, et par exemple lorsqu'une déformation plastique de la deuxième traverse se produit, la partie inférieure ne repose plus sur les fonds des surfaces d'arrêt des supports alors que la partie supérieure est en appui contre le sommet de la surface d'arrêt de chaque support. La partie supérieure n'est en outre plus en appui contre l'appui médian.

Selon une possibilité compatible avec les précédentes, la deuxième traverse peut introduire au sol un effort dans la cellule uniquement par l'appui médian tant que la deuxième traverse subit une déformation inférieure à une déformation limite, la deuxième traverse introduisant des efforts dans la cellule uniquement par les deux supports dès lors que la deuxième traverse subit une déformation supérieure à la déformation limite.

La déformation limite peut être le début d'une déformation plastique de la deuxième traverse. Le train d'atterrissage se comporte alors comme un train à quatre points de fixation dès que la deuxième traverse se déforme plastiquement, et comme un train à trois points de fixation lorsque la deuxième traverse se déforme élastiquement.

Selon une possibilité compatible avec les précédentes, chaque support peut comporter une armature portant une garniture, la garniture comprenant la surface d'arrêt de ce support.

Par exemple, la garniture permet d'éviter un contact métal-métal entre le support et la traverse. Une telle garniture n'est par exemple pas métallique, voire en élastomère éventuellement.

Eventuellement, ladite armature peut comporter un demi-collier en U rendu solidaire de la cellule.

Un tel demi-collier est relativement simple et permet d'entourer la deuxième traverse en ménageant le jeu requis.

Selon une possibilité compatible avec les précédentes, ledit appui médian peut comporter un socle solidaire de la cellule, le socle portant un plot, la deuxième traverse étant en appui contre le plot lorsque le giravion repose sur un sol et en l'absence d'une accélération verticale et d'une déformation plastique de la deuxième traverse.

Par exemple, le plot est défini pour éviter un contact métal-métal entre le support et la traverse. Un tel plot n'est par exemple pas métallique, voire en élastomère éventuellement.

Le plot peut comprendre une face plane en contact avec la deuxième traverse. Alternativement, le plot peut comprendre une face en contact avec la deuxième traverse qui est conformée à une forme de la deuxième traverse, par exemple en s'étendant le long d'un arc de cercle.

Selon une possibilité compatible avec les précédentes, les deux orifices des deux supports peuvent avoir une forme oblongue dans deux plans longitudinaux-verticaux respectifs, ladite deuxième traverse ayant des sections circulaires dans lesdits plans longitudinaux-verticaux en l'absence de déformation.

Par exemple, chaque plan longitudinal-vertical est parallèle à la fois à un axe de lacet et à un axe de roulis du giravion.

La forme oblongue des orifices permet de laisser une liberté de mouvement en élévation à la deuxième traverse à sections circulaires.

Selon une possibilité compatible avec les précédentes, les deux supports peuvent être fixés respectivement à deux longerons de la cellule, les deux fixations étant fixées respectivement aux deux longerons, l'appui médian étant fixé à une structure s'étendant d'un longeron à l'autre longeron.

L'ossature du giravion peut donc comprendre deux longerons portant les deux supports et les deux fixations pour reprendre les efforts lors d'un atterrissage sévère. Chaque longeron peut comprendre une ou des poutres. Une autre poutre ou un cadre peut porter l'appui médian.

Selon une possibilité compatible avec les précédentes, les deux supports comprenant un premier support et un deuxième support, ladite branche centrale de la deuxième traverse peut porter une première butée et une deuxième butée configurées pour limiter, par interférence de forme respectivement avec le premier support et le deuxième support, une liberté de mouvement de la deuxième traverse par rapport à la cellule selon une direction allant du premier support au deuxième support.

Les deux supports et l'appui médian ne serrant pas la deuxième traverse, les deux butées permettent de limiter la liberté de mouvement de la deuxième traverse transversalement. Chaque butée peut, par exemple, comprendre un patin fixé par un système vis-écrou à la branche centrale de la deuxième traverse. Chaque butée peut être positionnée entre les deux supports.

Selon une possibilité compatible avec les précédentes, quand la première butée touche le premier support alors la deuxième butée n'est pas en contact avec le deuxième support, et quand la deuxième butée touche le deuxième support alors la première butée n'est pas en contact avec le premier support.

Cette architecture permet d'éviter d'avoir toujours une butée en contact contre aucun support.

Selon une possibilité compatible avec les précédentes, ledit appui médian peut s'étendre à égale distance des deux supports.

L'invention et ses avantages apparaîtront avec plus de détails dans le cadre de la description qui suit avec des exemples donnés à titre illustratif en référence aux figures annexées qui représentent :
la figure 1, une vue en perspective simplifiée d'un giravion selon l'invention,
la figure 2, une vue en perspective de la deuxième traverse d'un train d'atterrissage selon l'invention,
la figure 3, une vue longitudinale de la deuxième traverse d'un train d'atterrissage selon l'invention,
la figure 4, une vue longitudinale de la deuxième traverse d'un train d'atterrissage selon l'invention en vol,
la figure 5, une vue longitudinale de la deuxième traverse d'un train d'atterrissage selon l'invention, fonctionnant selon une première phase de fonctionnement, au sein d'un giravion ayant une masse minimale,
la figure 6, une vue longitudinale de la deuxième traverse d'un train d'atterrissage selon l'invention, fonctionnant selon une première phase de fonctionnement, au sein d'un giravion ayant une masse maximale,
la figure 7, une vue longitudinale de la deuxième traverse d'un train d'atterrissage selon l'invention, durant une transition entre la première phase de fonctionnement et une seconde phase de fonctionnement, et
la figure 8, une vue longitudinale de la deuxième traverse d'un train d'atterrissage selon l'invention, fonctionnant selon une deuxième phase de fonctionnement.

Les éléments présents dans plusieurs figures distinctes sont affectés d'une seule et même référence.

Trois directions X, Y et Z orthogonales les unes par rapport aux autres sont représentées sur les figures.

La première direction X est dite longitudinale et est parallèle à l'axe de roulis du giravion illustré. Le terme « longitudinal » est relatif à toute direction parallèle à la première direction X.

La deuxième direction Y est dite transversale et est parallèle à l'axe de tangage du giravion illustré. Le terme « transversal » est relatif à toute direction parallèle à la deuxième direction Y.

Enfin, la troisième direction Z est dite en élévation et est parallèle à l'axe de lacet du giravion illustré. L'expression « en élévation » est relative à toute direction parallèle à la troisième direction Z.

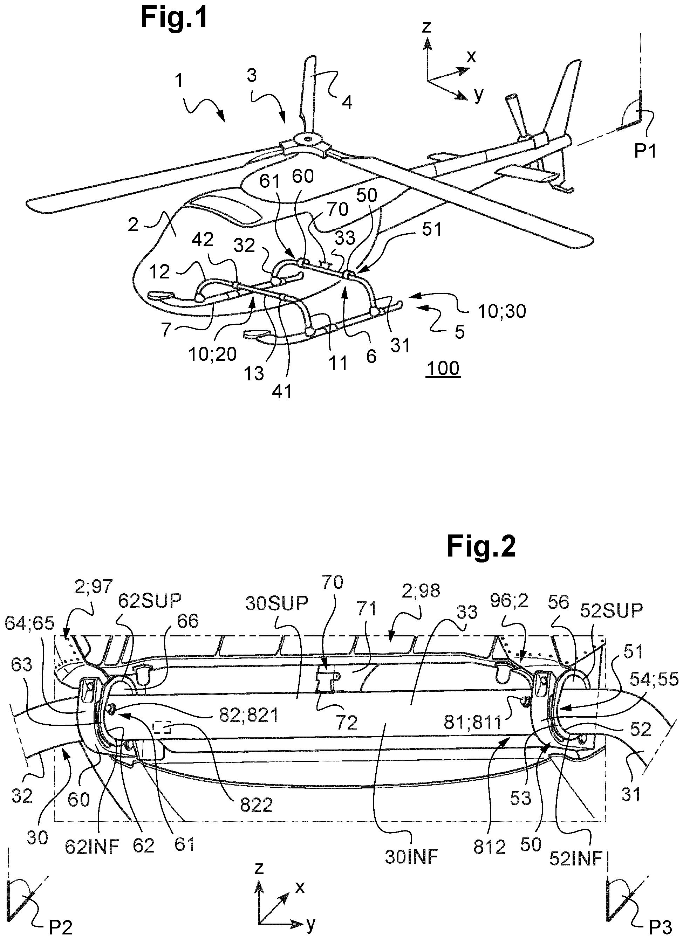

La figure 1 présente un giravion 1. Le giravion 1 comporte une voilure tournante 3 portée par une cellule 2. La voilure tournante 3 peut comprendre au moins trois pales 4, chaque pale 4 pouvant être mobile notamment en traînée par rapport à un moyeu.

La cellule 2 s'étend longitudinalement le long d'un plan de symétrie P1. De plus, la cellule 2 repose sur un train d'atterrissage 5 à patins. En particulier, le train d'atterrissage 5 est attaché à une ossature de la cellule 2.

On note qu'une partie de la cellule 2 a été rendue transparente sur la figure 1 pour permettre la visualisation du train d'atterrissage 5.

Ce train d'atterrissage 5 comporte un premier patin 6 et un deuxième patin 7. Le premier patin 6 et le deuxième patin 7 forment un plan susceptible de reposer sur un sol 100 plat.

Dès lors, le train d'atterrissage 5 comprend deux traverses 10 transversales reliant le premier patin 6 et le deuxième patin 7, à savoir une première traverse 20 et une deuxième traverse 30. La référence 10 est utilisée pour désigner n'importe quelle traverse, les références 20 et 30 étant utilisées si nécessaire pour désigner individuellement une traverse particulière.

Eventuellement, la première traverse 20 forme une traverse avant et la deuxième traverse 30 forme une traverse arrière, les termes « avant » et « arrière » étant usuellement utilisés par l'homme du métier et étant considérés selon un sens d'avancement vers l'avant du giravion 1.

La figure 1 illustre un giravion 1 ayant deux patins 6, 7 qui s'étendent chacun d'une extrémité arrière libre à une extrémité avant libre, chaque traverse 10 étant connectée entre les extrémités avant et arrière de chaque patin 6,7. D'autres réalisations sont possibles, telles qu'illustrées par exemple dans le brevet FR 2 749 561.

Chaque traverse 20, 30 est pourvue d'une première branche 11, 31 qui est solidarisée de manière usuelle au premier patin 6, et d'une deuxième branche 12, 32 solidarisée de manière usuelle au deuxième patin 7.

De plus, chaque traverse 20, 30 schématisée est continue en comportant une branche centrale 13, 33 s'étendant de la première branche 11, 31 à la deuxième branche descendante 12, 32. Les branches 11, 12, 31, 32 sont parfois dénommées « branches descendantes » dans la mesure où ces branches 11, 12, 31, 32 s'étendent de la branche centrale 13, 33 concernée vers un patin 6, 7 en se rapprochant du sol lorsque le giravion 1 est au sol. Ainsi, la première traverse 20 comporte successivement une première branche descendante primaire 11, une branche centrale primaire 13 et une deuxième branche descendante primaire 12. De même, la deuxième traverse 30 comporte successivement une première branche descendante secondaire 31, une branche centrale secondaire 33 et une deuxième branche descendante secondaire 32.

Sur un sol plat, chaque traverse 20, 30 et en particulier chaque branche centrale 13, 33 peut être décomposée en une partie supérieure et une partie inférieure vue par un observateur. La partie inférieure et la partie supérieure peuvent par exemple se rejoindre à mi-hauteur de la traverse.

Par ailleurs, chaque traverse 10 est fixée à la cellule 2.

Ainsi, la première traverse 20 est connectée à la cellule 2 du giravion 1 uniquement par deux fixations 41, 42. Chaque fixation 41, 42 entoure sans jeu la première traverse 20 et est solidaire de l'ossature de la cellule 2. Par exemple, les deux fixations 41, 42 sont fixées à deux longerons respectifs de la cellule 2. Selon un exemple, chaque fixation 41, 42 comporte un demi-collier fixé à un portant de l'ossature, et par exemple d'un longeron, le demi-collier enserrant une garniture en deux parties entourant sans jeu la première traverse 20.

En référence à la figure 2, la deuxième traverse 30 est uniquement portée en vol, à savoir lorsque les patins 6, 7 ne touchent plus le sol, par un premier support 50 et un deuxième support 60. Le premier support 50 et le deuxième support 60 sont dénommés plus simplement « support ».

Les deux supports 50, 60 sont rendus solidaires de la cellule 2, et en particulier de son ossature. Par exemple, le premier support 50 et le deuxième support 60 sont rendus solidaires respectivement d'un premier longeron 96 de la cellule 2 et d'un deuxième longeron 97 de la cellule 2. Eventuellement, le premier longeron 96 est aussi solidaire d'une fixation 41 alors que le deuxième longeron 97 est solidaire de l'autre fixation 42.

Le premier support 50 et le deuxième support 60 sont traversés de part en part par la deuxième traverse 30 selon une direction transversale DIR allant du premier support 50 au deuxième support 60. En particulier, le premier support 50 et le deuxième support 60 sont traversés par la branche centrale 33 de la deuxième traverse 30.

A cet effet, le premier support 50 et le deuxième support 60 présentent respectivement deux orifices, à savoir respectivement un premier orifice 51 et un deuxième orifice 61. Le premier orifice 51 et le deuxième orifice 61 sont traversés transversalement par la deuxième traverse 30. Les deux orifices 51, 61 peuvent être délimités, radialement autour de la direction transversal DIR, respectivement par deux surfaces d'arrêt 52, 62. Ainsi, le premier orifice 51 peut être délimité radialement par rapport à la direction transversal DIR par une première surface d'arrêt 52 du premier support 50. De même, le deuxième orifice 61 peut être délimité radialement par rapport à la direction transversal DIR par une deuxième surface d'arrêt 62 du deuxième support 60.

Par exemple, le premier support 50 comporte une armature dite « première armature 54 ». La première armature 54 porte une garniture dite « première garniture 53 » qui s'étend le long d'une ligne fermée. Dès lors, la première surface d'arrêt 52 est une face interne de la première garniture 53 qui entoure radialement le premier orifice 51. Selon l'exemple illustré, la première armature 54 comporte un demi-collier 55 en U rendu solidaire de la cellule 2, par exemple directement ou via une pièce de jonction au premier longeron 96.

Par exemple, le deuxième support 60 comporte une armature dite « deuxième armature 64 ». La deuxième armature 64 porte une garniture dite « deuxième garniture 63 » qui s'étend le long d'une ligne fermée. Dès lors, la deuxième surface d'arrêt 62 est une face interne de la deuxième garniture 63 qui entoure radialement le deuxième orifice 61. Selon l'exemple illustré, la deuxième armature 64 comporte un demi-collier 65 en U rendu solidaire de la cellule 2, par exemple directement ou via une pièce de jonction au deuxième longeron 97.

Pour limiter la liberté de mouvement en translation de la deuxième traverse 30 par rapport à la cellule 2 selon la direction transversale DIR, la branche centrale 33 peut porter une première butée 81 et une deuxième butée 82. La première butée 81 et la deuxième butée 82 sont, par exemple, agencées transversalement entre le premier support 50 et le deuxième support 60. La première butée 81 et la deuxième butée 82 ont pour fonction de limiter, par interférence de forme respectivement avec le premier support 50 et le deuxième support 60, le déplacement transversal de la deuxième traverse 30 par rapport à la cellule 2.

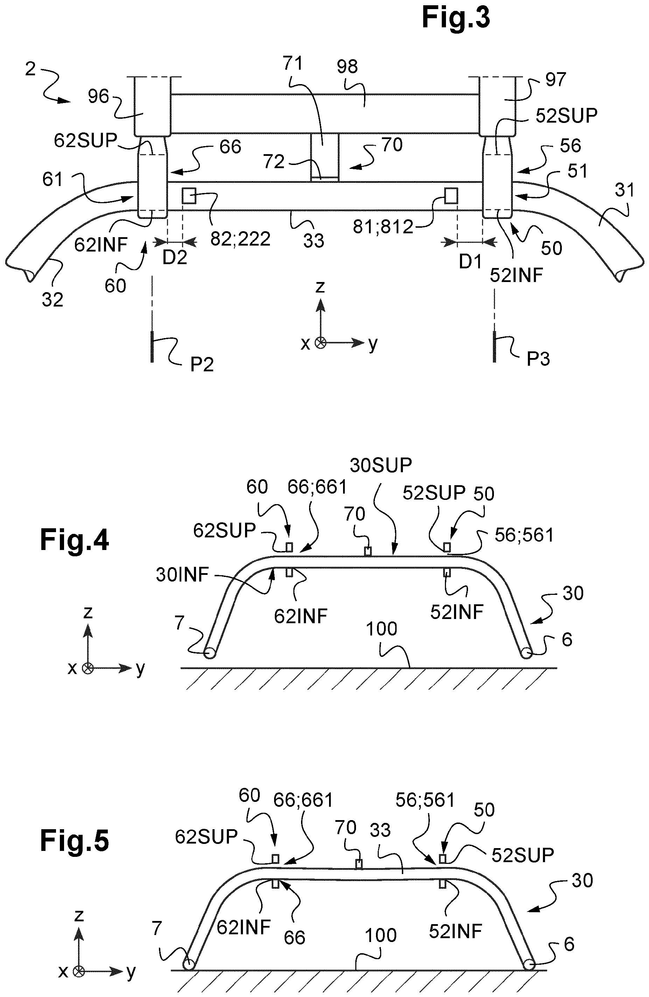

Par exemple, la première butée 81 comporte un système vis-écrou 811 traversant la deuxième traverse 30 pour solidariser un premier plot 812 à cette deuxième traverse 30. De même, la deuxième butée 82 comporte un système vis-écrou 821 traversant la deuxième traverse 30 pour solidariser un deuxième plot 822 à cette deuxième traverse 30. Le premier plot 812 et le deuxième plot 822 sont masqués sur la figure 2 et visibles sur la figure 3.

En référence à la figure 3, une première distance D1 représente la plus petite distance entre la première butée 81, voire son premier plot 812, et le premier support 50. De même, une deuxième distance D2 représente la plus petite distance entre la deuxième butée 82, voire son deuxième plot 822, et le deuxième support 60. Dès lors, la première distance D1 peut être différente de la deuxième distance D2 lorsqu'une butée touche le support correspondant. La première distance D1 et la deuxième distance D2 ne sont jamais nulles simultanément.

Indépendamment de cet aspect, et en référence à nouveau à la figure 2, la deuxième traverse 30 présente en permanence un jeu 56, 66 avec les deux surfaces d'arrêt 52,62, à savoir un premier jeu 56 avec la première surface d'arrêt 52 et un deuxième jeu 66 avec la deuxième surface d'arrêt 62. Ainsi, un espace vide sépare toujours la deuxième traverse 30 en élévation avec un fond 52INT et/ou un sommet 52SUP de la première surface d'arrêt 52, et un espace vide sépare toujours la deuxième traverse 30 en élévation avec un fond 62INT et/ou un sommet 62SUP de la deuxième surface d'arrêt 62. Le sommet d'une surface d'arrêt 52,62 est de fait situé au-dessus du fond de cette surface d'arrêt 52,62 lorsque le giravion 1 repose sur un sol 100 plat et à la vue d'un individu situé sur ce sol 100.

Pour présenter les jeux requis 56, 66, les deux orifices 51, 61 des deux supports 50, 60 peuvent avoir des formes oblongues dans deux plans longitudinaux-verticaux P2, P3 respectifs. A l'inverse, la deuxième traverse 30 peut avoir des sections circulaires dans ces plans longitudinaux-verticaux P2, P3 en l'absence de déformation. Ainsi, la deuxième traverse 30 a une liberté de mouvement en translation par rapport aux deux supports 50,60 selon des axes, éventuellement verticaux lorsque le giravion 1 repose sur un sol 100 horizontal.

Par ailleurs, la cellule 2 porte un appui médian 70. Cet appui médian 70 est agencé transversalement selon la direction transversale DIR entre le premier support 50 et le deuxième support 60. En outre, lorsque le giravion 1 repose sur un sol 100 horizontal alors cet appui médian 70 est disposé au-dessus de la deuxième traverse 30, à la vue d'un individu présent sur le sol.

Cet appui médian 70 peut s'étendre transversalement à égale distance du premier support 50 et du deuxième support 60, par exemple dans le plan de symétrie P1.

Cet appui médian 70 peut comporter un socle 71 solidaire de la cellule 2, et par exemple d'une structure 98 s'étendant du premier longeron 96 au deuxième longeron 97 précités. Le socle 71 peut être fixé à cette structure 98 de manière usuelle, par exemple par des moyens de vissage et/ou de rivetage.

Eventuellement, le socle 71 peut porter un plot 72.

Dans ces conditions et tel qu'illustré sur la figure 2, (a) en vol ou (b) lorsque le giravion 1 repose sur un sol 100 et en l'absence d'une accélération verticale et d'une déformation plastique de la deuxième traverse, alors la deuxième traverse 30 est en appui contre l'appui médian 70 situé au-dessus de cette deuxième traverse 30. De plus, deux jeux 56, 66 sont présents au-dessus de la deuxième traverse 30 au sein des deux supports. En effet, la partie inférieure 30INF de la deuxième traverse repose sur un fond 52INF, 62INF de la surface d'arrêt 52, 62 de chaque support 50, 60 alors qu'un jeu 56, 66 sépare la partie supérieure 30SUP de la deuxième traverse d'un sommet 52SUP, 62SUP de la surface d'arrêt 52, 62 de chaque support 50, 60.

Les figures 4 à 8 illustrent le fonctionnement de l'invention.

La figure 4 illustre la deuxième traverse 30 en vol. Dans ces conditions, l'appui médian 70, et le cas échéant le plot 72, repose sur la partie supérieure 30SUP de la deuxième traverse 30. En outre, des jeux 561, 661 sont présents dans les deux supports 50, 60 au-dessus de la deuxième traverse 30. En raison de la pesanteur, la partie inférieure 30INF de la deuxième traverse 30 repose en effet sur les fonds 52INF, 62INF de la première surface d'arrêt 52 et de la deuxième surface d'arrêt 62. La deuxième traverse 30 est suspendue sous la cellule 2, en étant néanmoins en contact avec l'appui médian 70.

Lors d'une première phase de fonctionnement se produisant durant un atterrissage sur un sol 100 ou au repos sur le sol 100, l'appui médian 70 exerce un effort sur la deuxième traverse 30, sensiblement au centre de sa branche centrale 33. La branche centrale 33 fléchit. Dès lors, un jeu inférieur 562, 662 peut séparer la deuxième traverse 30 et le fond 52INF, 62INF de chaque surface d'arrêt 52, 62, et un jeu supérieur 561, 661 peut séparer la deuxième traverse 30 et le sommet 52SUP, 62SUP de chaque surface d'arrêt 52, 62.

Le train d'atterrissage 5 se comporte ainsi comme un train à trois points de fixation. En outre, l'utilisation d'un appui médian 70 permet de découpler le mode de vibration en roulis de la cellule 2 sur son train d'atterrissage 5.

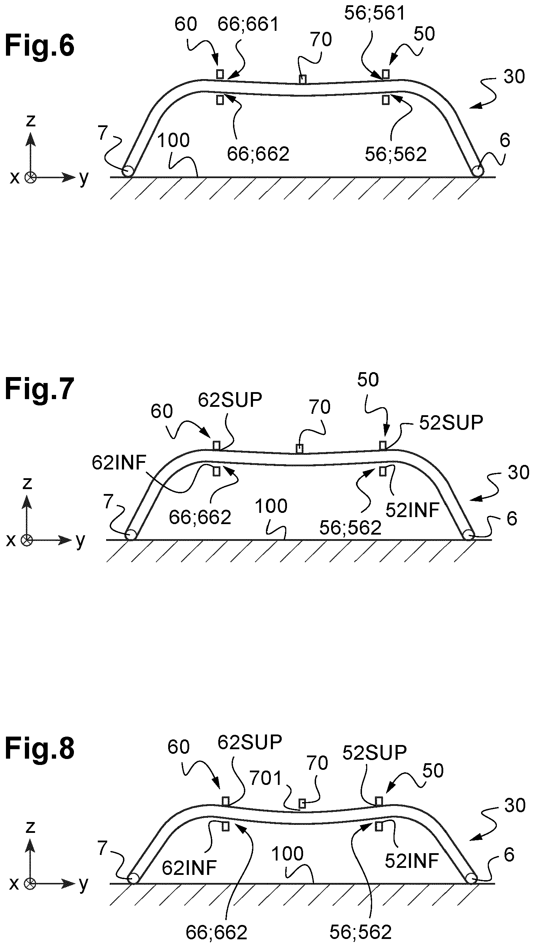

La figure 5 illustre un giravion 1 posé au sol mais avec une masse minimale, alors que la figure 6 illustre un giravion 1 posé au sol mais avec une masse maximale.

Dans ces conditions, la deuxième traverse 30 introduit un effort dans la cellule 2 uniquement par l'appui médian 70 tant que la deuxième traverse 30 subit une déformation inférieure à une déformation limite.

Par contre, lors d'un atterrissage sévère et en référence à la figure 7, la deuxième traverse 30 continue à fléchir et atteint une deuxième phase de fonctionnement. Le passage de la première phase de fonctionnement à la deuxième phase de fonctionnement se produit lorsque la déformation de la deuxième traverse dépasse la déformation limite, et par exemple peut correspondre au passage d'une phase de déformation dans le domaine élastique de la deuxième traverse à une déformation dans le domaine plastique de la deuxième traverse.

La deuxième traverse 30 est alors en appui non seulement contre l'appui médian 70 mais aussi contre les sommets 52SUP, 62SUP des surfaces d'arrêt 52,62.

Si la déformation se poursuit et en référence à la figure 8, la deuxième traverse 30 s'éloigne de l'appui médian 70 mais reste en contact avec les sommets 52SUP, 62SUP des surfaces d'arrêt 52,62. Le train d'atterrissage 5 se comporte alors comme un train à quatre points de fixation. Le cas échéant, la deuxième traverse 30 continue de fléchir et se déforme plastiquement de manière à absorber une partie de l'énergie résultant de l'atterrissage. Par suite, la deuxième traverse 30 introduit des efforts dans la cellule 2 uniquement par les deux supports 50, 60 dès lors que la deuxième traverse 30 subit une déformation supérieure à la déformation limite.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles, qui sont dérivables des revendications.

## Revendications

1. Giravion (1) muni d'une voilure tournante (3) et d'un train d'atterrissage (5) à patins, le train d'atterrissage (5) étant muni d'un premier patin (6) et d'un deuxième patin (7) ainsi que d'une première traverse (20) et d'une deuxième traverse (30) reliant chacune le premier patin (6) au deuxième patin (7), la première traverse (20) et la deuxième traverse (30) ayant chacune une première branche (11, 31) descendante solidarisée au premier patin (6) ainsi qu'une deuxième branche (12, 32) descendante solidarisée au deuxième patin (7) et une branche centrale (13, 33) reliant la première branche (11, 31) à la deuxième branche (12, 32), la première traverse (20) étant connectée à une cellule (2) du giravion (1) uniquement par deux fixations (41, 42), la deuxième traverse (30) étant uniquement portée en vol par deux supports (50, 60) fixés à la (2), **caractérisé en ce que** les deux supports (50, 60) sont traversés par la deuxième traverse (30),
chaque support (50, 60) comprenant un orifice (51, 61) délimité par une surface d'arrêt (52, 62) de ce support (50, 60), la deuxième traverse (30) présentant tout le temps un jeu (56, 66) avec chaque surface d'arrêt (52, 62), ladite cellule (2) portant un appui médian (70) agencé transversalement entre les deux supports (50, 60) et au-dessus de la deuxième traverse (30) lorsque le giravion (1) repose sur un sol (100) horizontal, la deuxième traverse (30) étant en appui contre l'appui médian (70) et lesdits jeux (56, 561, 66, 661) étant présents au-dessus de la deuxième traverse (30) lorsque le giravion (1) repose sur un sol (100) et en l'absence d'une accélération verticale et d'une déformation plastique de la deuxième traverse.

2. Giravion selon la revendication 1, dans lequel la deuxième traverse (30) ayant en élévation une partie inférieure (30INF) et une partie supérieure (30SUP), lorsque le giravion (1) repose sur un sol (100) et en l'absence d'une accélération verticale et d'une déformation plastique de la deuxième traverse alors la partie inférieure (30INF) repose sur un fond (52INF, 62INF) de la surface d'arrêt (52, 62) de chaque support (50, 60) alors qu'un dit jeu (56, 561, 66, 661) sépare la partie supérieure (30SUP) d'un sommet (52SUP, 62SUP) de la surface d'arrêt (52, 62) de chaque support (50, 60) et que la partie supérieure (30SUP) est en appui contre l'appui médian (70).

3. Giravion selon l'une quelconque des revendications 1 à 2, dans lequel la deuxième traverse (30) introduit au sol un effort dans la cellule (2) uniquement par l'appui médian (70) tant que la deuxième traverse (30) subit une déformation inférieure à une déformation limite, la deuxième traverse (30) introduisant des efforts dans la cellule uniquement par les deux supports (50, 60) dès lors que la deuxième traverse (30) subit une déformation supérieur à la déformation limite.

4. Giravion selon l'une quelconque des revendications 1 à 3, dans lequel chaque support (50, 60) comporte une armature (54, 64) portant une garniture (53, 63), la garniture (53, 63) comprenant la surface d'arrêt (52, 62) de ce support (50, 60).

5. Giravion selon la revendication 4, dans lequel ladite armature (54, 64) comporte un demi-collier (55, 65) en U rendu solidaire de la cellule (2).

6. Giravion selon l'une quelconque des revendications 1 à 5, dans lequel ledit appui médian (70) comporte un socle (71) solidaire de la cellule (2), le socle (71) portant un plot (72), la deuxième traverse (30) étant en appui contre le plot (72) lorsque le giravion (1) repose sur un sol (100) et en l'absence d'une accélération verticale et d'une déformation plastique de la deuxième traverse.

7. Giravion selon l'une quelconque des revendications 1 à 6, dans lequel les deux orifices (51, 61) des deux supports (50, 60) ont une forme oblongue dans deux plans longitudinaux-verticaux (P2, P3) respectifs, ladite deuxième traverse (30) ayant des sections circulaires dans lesdits plans longitudinaux-verticaux (P2, P3) en l'absence de déformation.

8. Giravion selon l'une quelconque des revendications 1 à 7, dans lequel les deux supports (50, 60) sont fixés respectivement à deux longerons (96, 97) de la cellule (2), les deux fixations (41, 42) étant fixées respectivement aux deux longerons (96, 97), l'appui médian (70) étant fixé à une structure (98) s'étendant d'un longeron (96) à l'autre longeron (97).

9. Giravion selon l'une quelconque des revendications 1 à 8, dans lequel les deux supports (50, 60) comprenant un premier support (50) et un deuxième support (60), ladite branche centrale (33) de la deuxième traverse (30) porte une première butée (81) et une deuxième butée (82) configurées pour limiter, par interférence de forme respectivement avec le premier support (50) et le deuxième support (60), une liberté de mouvement de la deuxième traverse (30) par rapport à la cellule selon une direction allant du premier support (50) au deuxième support (60).

10. Giravion selon la revendication 9, dans lequel, quand la première butée (81) touche le premier support (50) alors la deuxième butée (82) n'est pas en contact avec le deuxième support (60), et quand la deuxième butée (82) touche le deuxième support (60) alors la première butée (81) n'est pas en contact avec le premier support (50).

11. Giravion selon l'une quelconque des revendications 1 à 10, dans lequel ledit appui médian (70) s'étend à égale distance des deux supports (50, 60).

## Patentansprüche

1. Drehflügelflugzeug (1) mit einem Drehflügel (3) und einem Landegestell (5) mit Kufen, wobei das Landegestell (5) eine erste Kufe (6) und eine zweite Kufe (7) sowie einen ersten Querträger (20) und einen zweiten Querträger (30) aufweist, die jeweils die erste Kufe (6) mit der zweiten Kufe (7) verbinden, wobei der erste Querträger (20) und der zweite Querträger (30) jeweils einen ersten absteigenden Ast (11, 31), der mit der mit der ersten Kufe (6) fest verbunden ist, sowie einen zweiten absteigenden Ast (12, 32), der mit der zweiten Kufe (7) fest verbunden ist, und einen mittleren Ast (13, 33) umfassen, der den ersten Ast (11, 31) mit dem zweiten Ast (12, 32) verbindet, wobei der erste Querträger (20) nur durch zwei Befestigungen (41, 42) mit einer Zelle (2) des Drehflügelflugzeugs (1) verbunden ist, und der zweite Querträger (30) im Flug nur von zwei an der Zelle (2) befestigten Halterungen (50, 60) getragen ist,
**dadurch gekennzeichnet, dass** die beiden Halterungen (50, 60) von dem zweiten Querträger (30) durchlaufen werden, wobei jede Halterung (50, 60) eine Öffnung (51, 61) umfasst, die von einer Anschlagfläche (52, 62) dieser Halterung (50, 60) begrenzt ist, wobei der zweite Querträger (30) ständig ein Spiel (56, 66) zu jeder Anschlagfläche (52, 62) aufweist, wobei die Zelle (2) eine mittlere Stütze (70) trägt, die quer zwischen den beiden Halterungen (50, 60) und oberhalb des zweiten Querträgers (30) angeordnet ist, wenn das Drehflügelflugzeug (1) auf einem horizontalen Boden (100) steht, wobei der zweite Querträger (30) an der mittleren Stütze (70) anliegt und die Spiele (56, 561, 66, 661) oberhalb des zweiten Querträgers (30) vorhanden sind, wenn das Drehflügelflugzeug (1) auf einem Boden (100) steht und keine vertikale Beschleunigung und keine plastische Verformung des zweiten Querträgers vorliegt.

2. Drehflügelflugzeug nach Anspruch 1,
bei dem der zweite Querträger (30) in der Elevation einen unteren Abschnitt (30INF) und einen oberen Abschnitt (30SUP) aufweist, und, wenn das Drehflügelflugzeug (1) in Abwesenheit einer vertikalen Beschleunigung und einer plastischen Verformung des zweiten Querträgers auf einem Boden (100) steht, der untere Abschnitt (30INF) auf einem Boden (52INF, 62INF) der Anschlagfläche (52, 62) jeder Halterung (50, 60) liegt, während ein besagtes Spiel (56, 561, 66, 661) den oberen Teil (30SUP) von einem Scheitelpunkt (52SUP, 62SUP) der Anschlagfläche (52, 62) jeder Halterung (50, 60) trennt und der obere Teil (30SUP) an der mittleren Stütze (70) anliegt.

3. Drehflügelflugzeug nach einem der Ansprüche 1 bis 2,
bei dem der zweite Querträger (30) am Boden eine Kraft in die Zelle (2) nur über die mittlere Stütze (70) einleitet, solange der zweite Querträger (30) eine Verformung erfährt, die kleiner als eine Grenzverformung ist, und der zweite Querträger (30) Kräfte in die Zelle nur über die beiden Halterungen (50, 60) einleitet, sobald der zweite Querträger (30) eine Verformung erfährt, die größer als die Grenzverformung ist.

4. Drehflügelflugzeug nach einem der Ansprüche 1 bis 3,
bei dem jede Halterung (50, 60) eine Armierung (54, 64) aufweist, die einen Belag (53, 63) trägt, wobei der Belag (53, 63) die Anschlagfläche (52, 62) dieser Halterung (50, 60) umfasst.

5. Drehflügelflugzeug nach Anspruch 4,
bei dem die Armierung (54, 64) eine U-förmige Halbschelle (55, 65) umfasst, die fest mit der Zelle (2) verbunden ist.

6. Drehflügelflugzeug nach einem der Ansprüche 1 bis 5,
bei dem die mittlere Stütze (70) einen Sockel (71) umfasst, der fest mit der Zelle (2) verbunden ist, der Sockel (71) einen Klotz (72) trägt, und der zweite Querträger (30) an dem Klotz (72) anliegt, wenn das Drehflügelflugzeug (1) auf einem Boden (100) steht und keine vertikale Beschleunigung und keine plastische Verformung des zweiten Querträgers vorliegt.

7. Drehflügelflugzeug nach einem der Ansprüche 1 bis 6,
bei dem die beiden Öffnungen (51, 61) der beiden Halterungen (50, 60) in zwei jeweiligen Längs-Vertikal-Ebenen (P2, P3) eine längliche Form aufweisen, und der zweite Querträger (30) in den Längs-Vertikal-Ebenen (P2, P3) in Abwesenheit einer Verformung kreisförmige Querschnitte aufweist.

8. Drehflügelflugzeug nach einem der Ansprüche 1 bis 7,
bei dem die beiden Halterungen (50, 60) jeweils an zwei Längsträgern (96, 97) der Zelle (2) befestigt sind, die beiden Befestigungen (41, 42) jeweils an den beiden Längsträgern (96, 97) befestigt sind, und die mittlere Stütze (70) an einer Struktur (98) befestigt ist, die sich von einem Längsträger (96) zu dem anderen Längsträger (97) erstreckt.

9. Drehflügelflugzeug nach einem der Ansprüche 1 bis 8,
bei dem die beiden Halterungen (50, 60) eine erste Halterung (50) und eine zweite Halterung (60) umfassen, wobei der mittlere Ast (33) des zweiten Querträgers (30) einen ersten Anschlag (81) und einen zweiten Anschlag (82) trägt, die konfiguriert sind, um durch Forminterferenz jeweils mit der ersten Halterung (50) und der zweiten Halterung (60) eine Bewegungsfreiheit des zweiten Querträgers (30) in Bezug auf die Zelle in einer Richtung von der ersten Halterung (50) zur zweiten Halterung (60) zu begrenzen.

10. Drehflügelflugzeug nach Anspruch 9,
bei dem, wenn der erste Anschlag (81) die erste Halterung (50) berührt, der zweite Anschlag (82) nicht in Kontakt mit der zweiten Halterung (60) ist, und wenn der zweite Anschlag (82) die zweite Halterung (60) berührt, der erste Anschlag (81) nicht in Kontakt mit der ersten Halterung (50) ist.

11. Drehflügelflugzeug nach einem der Ansprüche 1 bis 10,
bei dem sich die mittlere Stütze (70) in gleichem Abstand von den beiden Halterungen (50, 60) erstreckt.

## Claims

1. Rotorcraft (1) provided with a rotary wing (3) and landing gear (5) with skids, the landing gear (5) being provided with a first skid (6) and a second skid (7) as well as a first cross-member (20) and a second cross-member (30) each connecting the first skid (6) to the second skid (7), the first cross-member (20) and the second cross-member (30) each having a first descending arm (11, 31) attached to the first skid (6) and a second descending arm (12, 32) attached to the second skid (7) and a central arm (13, 33) connecting the first arm (11, 31) to the second arm (12, 32), the first cross-member (20) being connected to an airframe (2) of the rotorcraft (1) solely by two fixings (41, 42), the second cross-member (30) being supported in flight solely by two supports (50, 60) fixed to the airframe (2), **characterized in that** the two supports (50, 60) are passed through by the second cross-member (30), each support (50, 60) comprising a hole (51, 61) delimited by a stop surface (52, 62) of this support (50, 60), the second cross-member (30) always having a clearance (56, 66) with each stop surface (52, 62), said airframe (2) carrying a median support (70) arranged transversely between the two supports (50, 60) and above the second cross-member (30) when the rotorcraft (1) is resting on a horizontal ground (100), the second cross-member (30) bearing against the median support (70) and said clearances (56, 561, 66, 661) being present above the second cross-member (30) when the rotorcraft (1) is resting on a ground (100) and in the absence of vertical acceleration and plastic deformation of the second cross-member.

2. Rotorcraft according to Claim 1, wherein the second cross-member (30) having in elevation a lower part (30INF) and an upper part (30SUP), when the rotorcraft (1) is resting on a ground (100) and in the absence of vertical acceleration and plastic deform of the second cross-member, the lower part (30INF) rests on a bottom (52INF, 62INF) of the stop surface (52, 62) of each support (50, 60) whilst a said clearance (56, 561, 66, 661) separates the upper part (30SUP) from a top (52SUP, 62SUP) of the stop surface (52, 62) of each support (50, 60) and the upper part (30SUP) bears against the median support (70).

3. Rotorcraft according to either one of Claims 1 or 2, wherein the second cross-member (30) introduces a force into the airframe (2) on the ground solely via the median support (70) as long as the second cross-member (30) undergoes a deformation below a limit deformation, the second cross-member (30) introducing forces into the airframe solely via the two supports (50, 60) as soon as the second cross-member (30) undergoes a deformation greater than the limit deformation.

4. Rotorcraft according to one of Claims 1 to 3, wherein each support (50, 60) includes a frame (54, 64) carrying a lining (53, 63), the lining (53, 63) comprising the stop surface (52, 62) of this support (50, 60).

5. Rotorcraft according to Claim 4,
wherein said frame (54, 64) includes a U-shaped half-collar (55, 65) integral with the airframe (2).

6. Rotorcraft according to one of Claims 1 to 5,
wherein said median support (70) includes a base (71) integral with the airframe (2), the base (71) carrying a stud (72), the second cross-member (30) bearing against the stud (72) when the rotorcraft (1) is resting on a ground (100) and in the absence of vertical acceleration and plastic deformation of the second cross-member.

7. Rotorcraft according to one of Claims 1 to 6,
wherein the two holes (51, 61) of the two supports (50, 60) have an oblong shape in two respective longitudinal-vertical planes (P2, P3), said second cross-member (30) have circular cross-sections in said longitudinal-vertical planes (P2, P3) in the absence of deformation.

8. Rotorcraft according to one of Claims 1 to 7,
wherein the two supports (50, 60) are respectively attached to two longitudinal beams (96, 97) of the airframe (2), the two fixings (41, 42) being respectively attached to the two longitudinal beams (96, 97), the median support (70) being attached to a structure (98) extending from one longitudinal beam (96) to the other longitudinal beam (97).

9. Rotorcraft according to one of Claims 1 to 8,
wherein the two supports (50, 60) comprise a first support (50) and a second support (60), said central arm (33) of the second cross-member (30) carries a first stop (81) and a second stop (82) designed to limit, by interference of shape with the first support (50) and the second support (60) respectively, freedom of movement of the second cross-member (30) relative to the airframe in a direction from the first support (50) to the second support (60).

10. Rotorcraft according to Claim 9,
wherein
when the first stop (81) touches the first support (50), the second stop (82) is not in contact with the second support (60), and when the second stop (82) touches the second support (60), the first stop (81) is not in contact with the first support (50).

11. Rotorcraft according to one of Claims 1 to 10,
wherein said median support (70) extends at an equal distance from both supports (50, 60).
